# EUROPEAN PATENT APPLICATION

(11) **EP 4 194 380 A2**
(43) Date of publication of application: **14.06.2023**
(21) Application number: 22211593.3
(22) Date of filing: 06.12.2022
(51) Int. Cl.: B65G 57/30, A24F 23/00, B65B 35/52, B65G 47/252

(54) **GROUPING UNIT AND GROUPING METHOD TO CREATE A STACK OF SNUS BOXES**

(30) Priority: 10.12.2021 IT 202100030995
(71) Applicant: Sasib S.p.A., 40013 Castel Maggiore (BO) (IT)
(72) Inventor: GHIOTTI, Roberto, 40133 BOLOGNA (IT); MANFREDI, Enrico, 40133 BOLOGNA (IT)
(74) Representative: Studio Torta S.p.A.

(57) **Abstract**

A grouping unit (18) and a grouping method to create a stack (9) of snus boxes (1), each comprising an upper wall (2) and a lower wall (3) There are: a conveyor (24), which is configured to move a succession of snus boxes (1) one after the other along a horizontal path (P2), which ends in an output station (S2), keeping the upper and lower walls (2, 3) of each snus box (1) horizontal and parallel to the horizontal path (P2); a lifting device (25), which is arranged in the area of the output station (S2) and is configured to push each snus box (1) arranged in the output station (S2) upwards and along a vertical path (P3), which is perpendicular to the horizontal path (P2); and a blocking device (26), which is arranged along the vertical path (P3) downstream of the output station (S2) and is configured to only enable a one-way movement of the snus boxes (1) along the vertical path (P3), so that the snus boxes (1) can only go up - and not down - after they have moved past the blocking device (26).

## Description

### CROSS-REFERENCE TO RELATED APPLICATIONS

This patent application claims priority from Italian patent application no. 102021000030995 filed on December 10, 2021 the entire disclosure of which is incorporated herein by reference.

### TECHNICAL FIELD

The invention relates to a grouping unit and to a grouping method to create a stack of snus boxes.

### PRIOR ART

Snus is a Swedish term used to indicate a wet powder tobacco for oral use, produced by means of a steam wetting process, or a powder material with added nicotine. Mainly produced and consumed in Sweden, Norway and Finland, its most common use is that of being placed in the mouth between the upper lip and gum for extended periods, ranging from a few minutes to several hours.

Two types of snus are available in the market: traditional suns or "*lössnus*" (loose snus), which is a loose wet powder that can be rolled in a cylindrical shape, and *"portionssnus"* (portion snus), which is a powder packed in permeable bags made of the same material as tea bags.

Snus bags are grouped so as to form groups of 4-30 snus bags, which are subsequently inserted in boxes made of a plastic material (or, more rarely, of a metal material). As described, for example, in patent applications WO2014124939A1 and WO2016202594A1, a snus box generally has a cylindrical shape and comprises a main container, which is closed by a removable main lid and defines, together with the main lid, a main chamber suited to house the group of new snus bags. In some cases, in the central area of the main lid there is obtained an auxiliary chamber, which is closed by an auxiliary lid and is suited to house used snus bags.

Generally speaking, snus bags are gathered in groups of five or ten, thus forming one single stack, in which all snus boxes are arranged on top of one another, laying a lower wall of a snus box on top of the upper wall of another adjacent snus box. Once a stack of snus boxes is formed, the stack is stabilized by wrapping it in a film of transparent plastic material, which shrinks around the stack by means of heat-shrinking.

Patent application CN108001762A discloses a grouping unit to create a stack of snus boxes.

Patent US3388816A discloses a grouping unit to create a stack of boxes, each having the shape of a disc and containing target clay pigeons with the shape of a disc used for clay pigeon shooting.

### DESCRIPTION OF THE INVENTION

The object of the invention is to provide a grouping unit and a grouping method to create a stack of snus boxes, which can reduce the total quantity of packing material, can operate at a high production speed and have a high flexibility that allows the conformation of the stack of snus boxes to be quickly changed.

According to the invention, there are provided a grouping unit and a grouping method to create a stack of snus boxes according to the appended claims.

The appended claims are an integral part of the following description.

### BRIEF DESCRIPTION OF THE DRAWINGS

The invention will now be described with reference to the accompanying drawings showing a non-limiting embodiment thereof, wherein:
- figures 1 and 2 are two different perspective views of a snus box;
- figure 3 is an exploded perspective view of the snus box of figure 1;
- figure 4 is a perspective view of a stack of snus boxes;
- figure 5 is a cross section view of a variant of the snus box of figure 1;
- figure 6 is a cross section view of two boxes manufactured according to figure 5 and interlocked with one another so as to form a stack;
- figure 7 is a view of figure 6 on a larger scale;
- figure 8 is a perspective view of a variant of a main container of the snus box of figure 1;
- figures 9 and 10 are two different perspective views, on a larger scale, of a detail of the main container of figure 8;
- figure 11 is a cross section view of a detail of the main container of figure 8;
- figures 12 and 13 are two different perspective views, with parts removed for greater clarity, of a packer machine to create the stack of snus boxes of figure 5;
- figure 14 is a perspective view, with parts removed for greater clarity, of a grouping unit of the packer machine of figures 12 and 13;
- figure 15 is a perspective view of part of the grouping unit of figure 14;
- figure 16 is a schematic view of a detail of the grouping unit of figure 14; and
- figures 17 and 18 are two different perspective views of a variant of the grouping unit of figure 14.

### PREFERRED EMBODIMENTS OF THE INVENTION

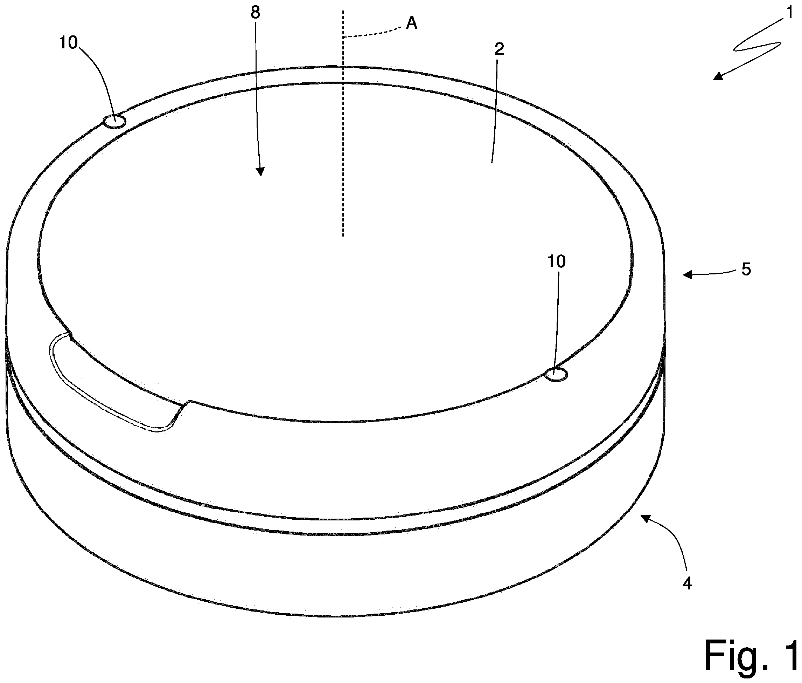

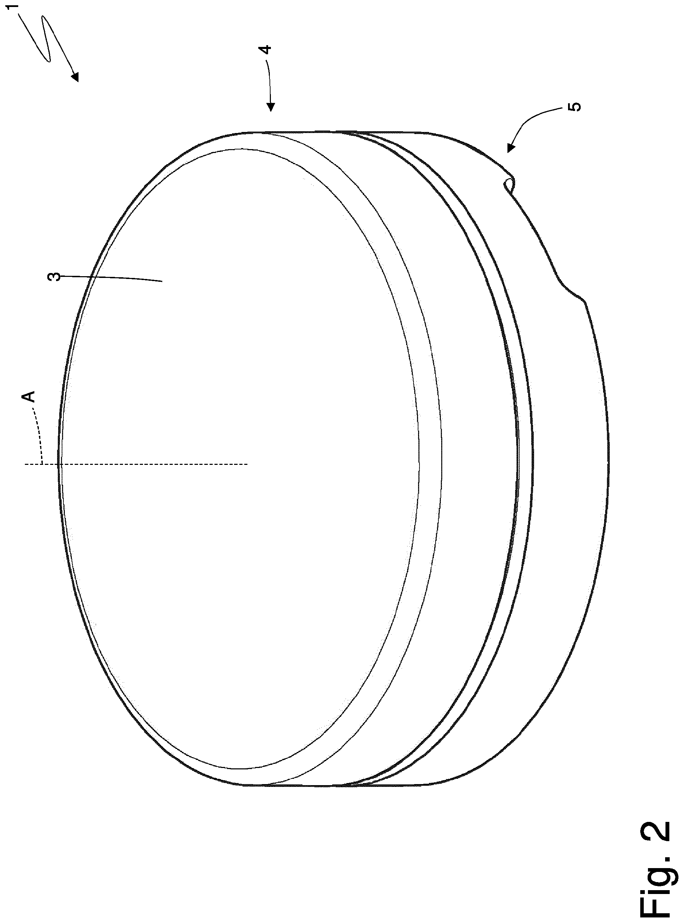

In figures 1, 2 and 3, number 1 indicates, as a whole, a snus box containing a group (not shown) of 4-30 snus bags; namely, the snus box 1 comprises a group (not shown) of new snus bags housed inside the snus box 1.

The snus box 1 shown in the accompanying figures has a cylindrical shape, which symmetrically develops along a longitudinal axis A and has an upper wall 2 and a lower wall 3, which are parallel to and opposite one another (and are both coaxial to one another and perpendicular to the longitudinal axis A). According to a different embodiment which is not shown herein, the snus box 1 has a prismatic shape, which develops along the longitudinal axis A and has a base shaped, for example, like a regular polygon; by way of example, the base of the suns box 1 could have the shape of a polygon with five or more sides.

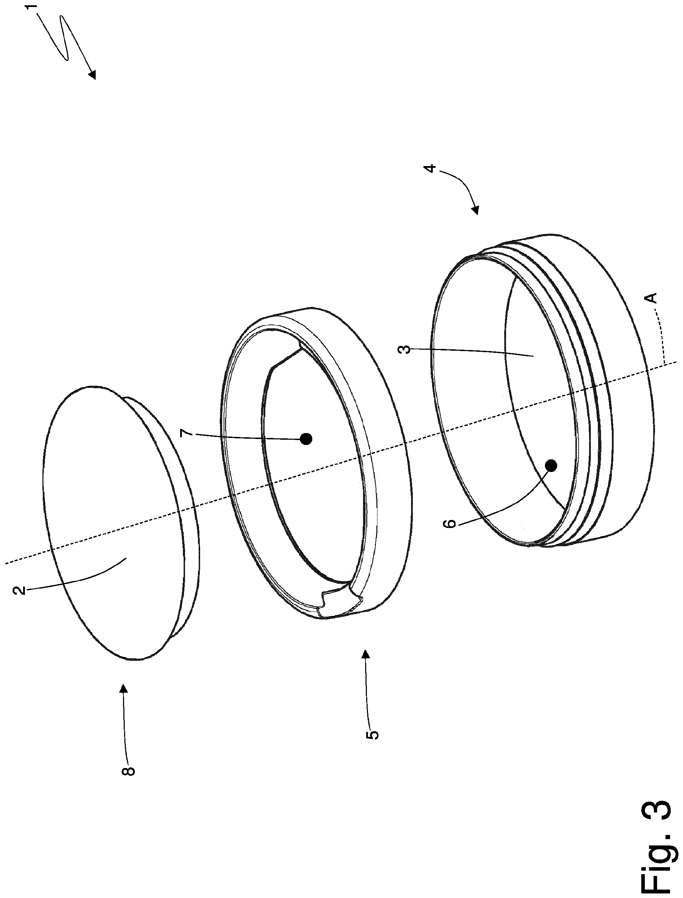

The snus box 1 comprises a main container 4, which has the lower wall 3 of the snus box 1, and a main lid 5, which has the upper wall 2 of the snus box 1, is coupled to the main container 4 and delimits, together with the main container 4, a main chamber 6 (shown in figure 3), which houses the group of new snus bags (i.e. before they are used). In the central area of the main lid 5 of the snus box 1 there is obtained an auxiliary chamber 7 (shown in figure 3), which is closed by an auxiliary lid 8 and is suited to house used snus bags (i.e. after their use); according to a different embodiment which is not shown herein, the auxiliary chamber 7 is absent.

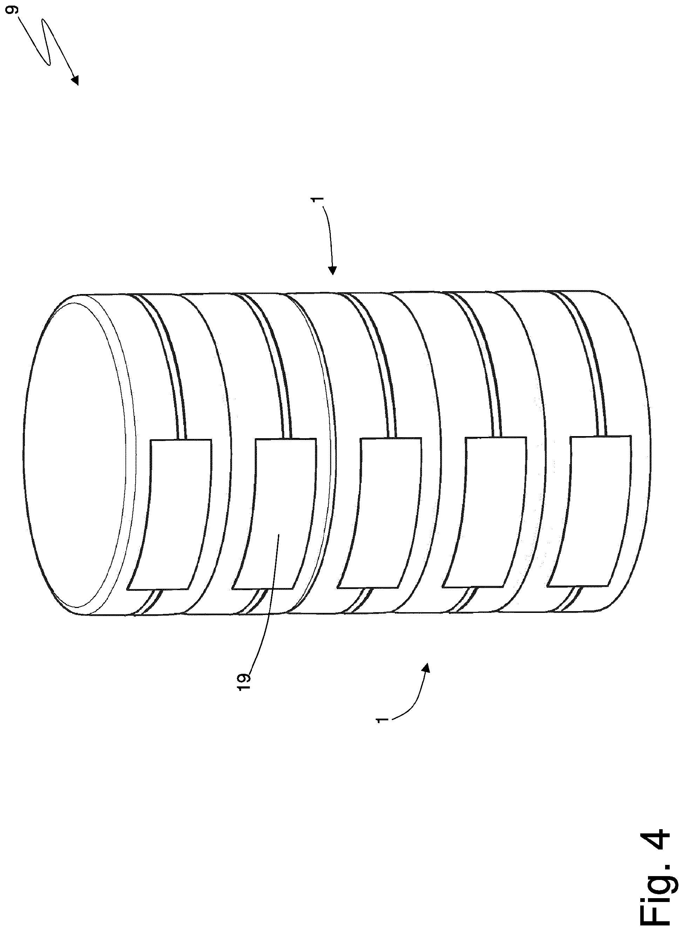

According to figure 4, the snus boxes 1 are gathered in groups of five (as shown in figure 4) or ten (according to a variant which is not shown herein), thus forming one single stack 9, in which all snus boxes 1 are arranged on top of one another, laying a lower wall 3 of a snus box 1 on top of the upper wall 2 of another adjacent snus box 1. In other words, the stack 9 of snus boxes 1 comprises a plurality of suns boxes 1 arranged on top of one another with a lower wall 3 of a snus box 1 in contact (or substantially in contact, i.e. very close to) with an upper wall 2 of another adjacent snus box 1. A stack 9 could obviously consist of any number of snus boxes 1 ranging from two to (usually) fifteen/twenty.

According to a possible embodiment shown in figures 1-4, the stack 9 of snus boxes 1 remains stable tanks to gluing: between the lower wall 3 of a snus box 1 and the upper wall 2 of another adjacent snus box 1 there is interposed glue 10 (typically, two or three glue points 10 symmetrically distributed around the longitudinal axis A), which determines a firm gluing. The glue 10 interposed between the snus boxes 1 of the stack 9 has an adhesion force that is sufficient to ensure an adequate stability and firmness of the stack 9, but, at the same time, said adhesion force is not too strong so as to allow the snus boxes 1 to be removed from the stack 9 applying a removing force that is not too big. Furthermore, the glue 10 interposed between the snus boxes 1 of the stack 9 preferably always remains in a jelly-like state so that it can easily and completely be removed from the snus boxes 1 after their separation from the stack 9, so as not to negatively affect the aesthetic appearance of the snus boxes 1.

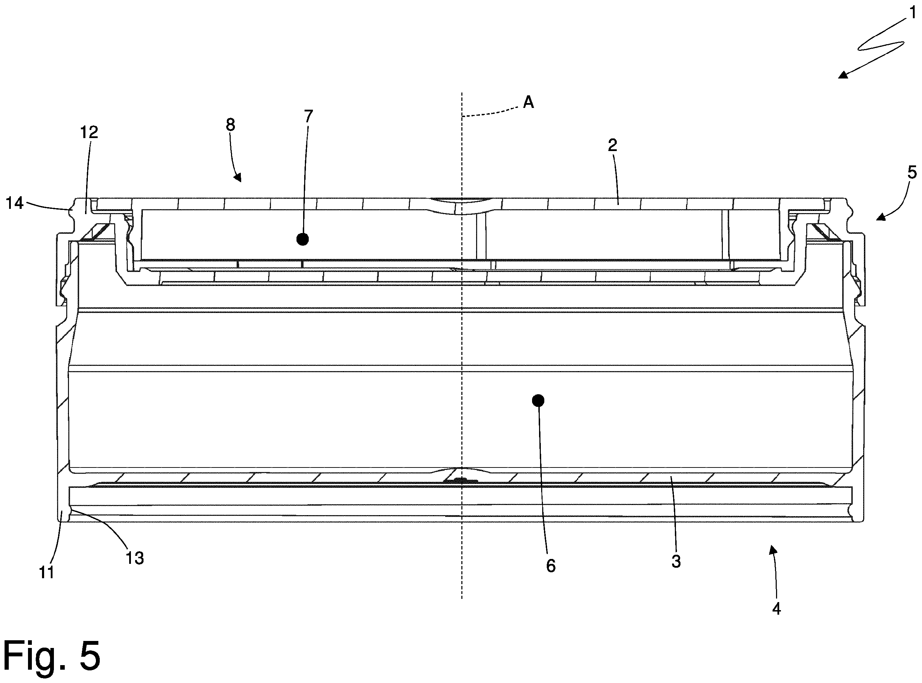

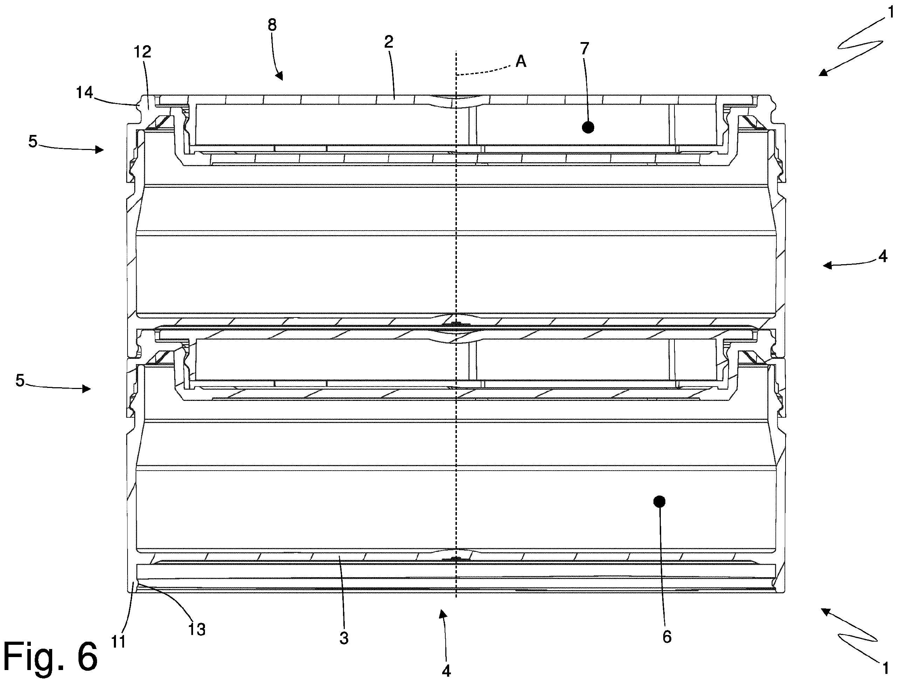

According to an alternative embodiment shown in figures 5, 6 and 7, between each snus box 1 and the adjacent snus box 1 there is an interlocking that determines a firm mechanical connection between the two snus boxes 1 in order to prevent the two snus boxes 1 from moving apart. In other words, the stack 9 of boxes 1 comprises, between an element of each snus box 1 and a corresponding element of the adjacent snus box 1, an interlocking that determines a firm mechanical connection between the two snus boxes 1 in order to prevent the two snus boxes 1 from moving apart. Namely, in this embodiment, the stack 9 of snus boxes 1 is remains stable thanks to an interlocking between the snus boxes 1, instead of being held firm by glue points 10.

The interlocking between two adjacent snus boxes 1 is preferably configured so that its creation and its elimination entail an elastic deformation of at least one element of one of the two snus boxes 1.

According to a preferred embodiment shown in the accompanying figures, each snus box 1 comprises a connection ring 11, which longitudinally projects (namely, parallel to the longitudinal axis A) from its lower wall 3 and is configured to embrace a lateral connection portion 12 of a snus box 1 arranged underneath. In particular, in each snus box 1, the connection ring 11 is an extension of the main container 4, whereas the lateral connection portion 12 is part of the lateral wall of the main lid 5.

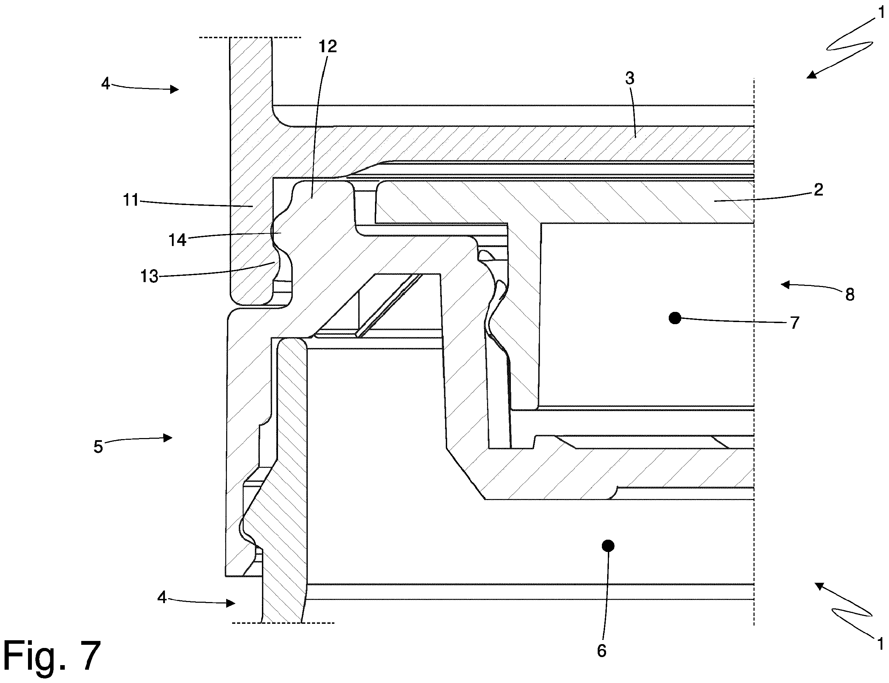

According to a preferred embodiment shown in the accompanying figures, in each snus box 1, the connection ring 11 comprises a rib 13, which radially projects inwards and, hence, towards the lateral connection portion 12 of a snus box 1 arranged underneath (as better shown in figure 7); furthermore, in each snus box 1, the lateral connection portion (12) has a rib 14, which radially projects outwards and, hence, towards the connection ring 11 of a snus box 1 arranged on top of it (as better shown in figure 7).

In the embodiment shown in the accompanying figures, the rib 14 of a snus box 1 arranged underneath presses, from the inside, against the connection ring 11 of a snus box 1 arranged on top, so as to cause an elastic deformation of the connection ring 11 in order to create the interlocking. On the other hand, always with reference to the embodiment shown in the accompanying figures, the rib 13 of a snus box 1 arranged on top does not press against the lateral connection portion 12 of a snus box 1 arranged underneath and, hence, does not cause an elastic deformation of the lateral connection portion 12 in order to create the interlocking (as shown in figure 7). According to a different embodiment which is not shown herein, also the rib 13 (or only the rib 13) of a snus box 1 arranged on top presses against the lateral connection portion 12 of a snus box 1 arranged underneath and, hence, causes an elastic deformation of the lateral connection portion 12 in order to create the interlocking.

As a consequence, in order to obtain an interlocking between two adjacent snus boxes 1, the connection ring 11 of the upper snus box 1 has to get elastically deformed (hence, being mechanically stressed) so as to be coupled to the lateral connection portion 12 of the lower snus box 1. Similarly, in order to break (open) an interlocking between two adjacent snus boxes 1, the connection ring 11 of the upper snus box 1 has to get elastically deformed (hence, being mechanically stressed) so as to be separated from the lateral connection portion 12 of the lower snus box 1.

In the embodiment shown in the accompanying figures, in two adjacent snus boxes 1, the rib 13 longitudinally steps over the rib 14; namely, in order to create the interlocking, the two ribs 13 and 14 have to longitudinally step over one another, thus causing, upon stepping over one another, an elastic deformation both of the connection ring 11 of a snus box 1 arranged on top and of the lateral connection portion 12. According to a different embodiment which is not shown herein, in two adjacent snus boxes 1, the rib 13 does not longitudinally step over the rib 14; namely, in order to create the interlocking, the two ribs 13 and 14 do not have to longitudinally step over one another.

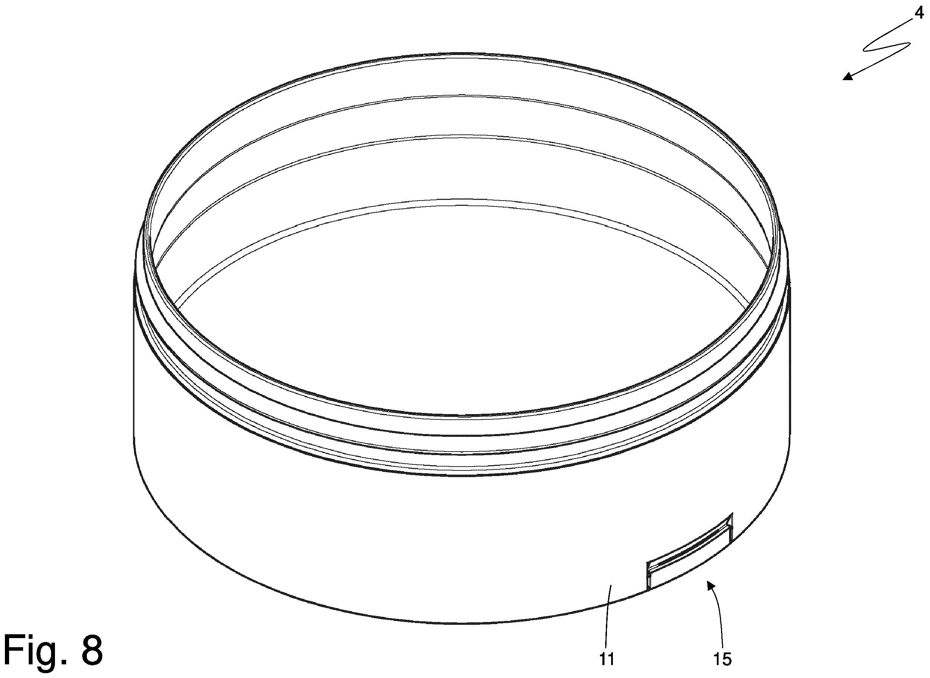

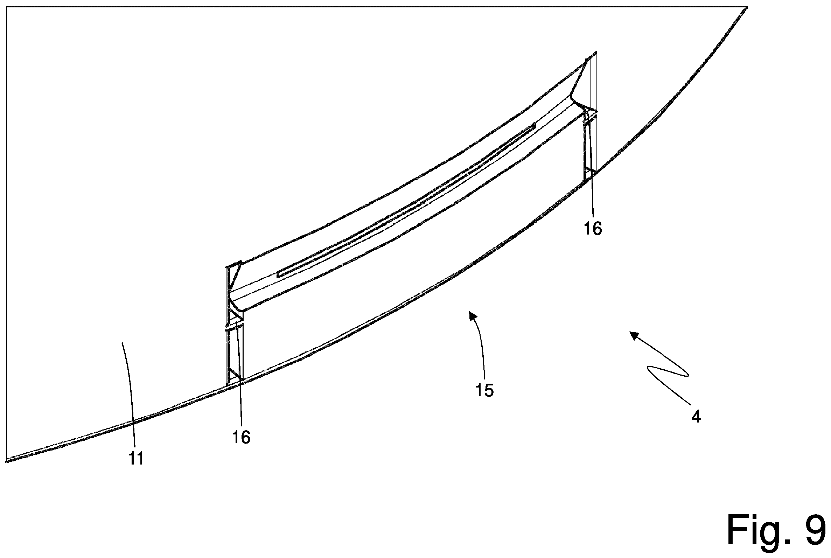

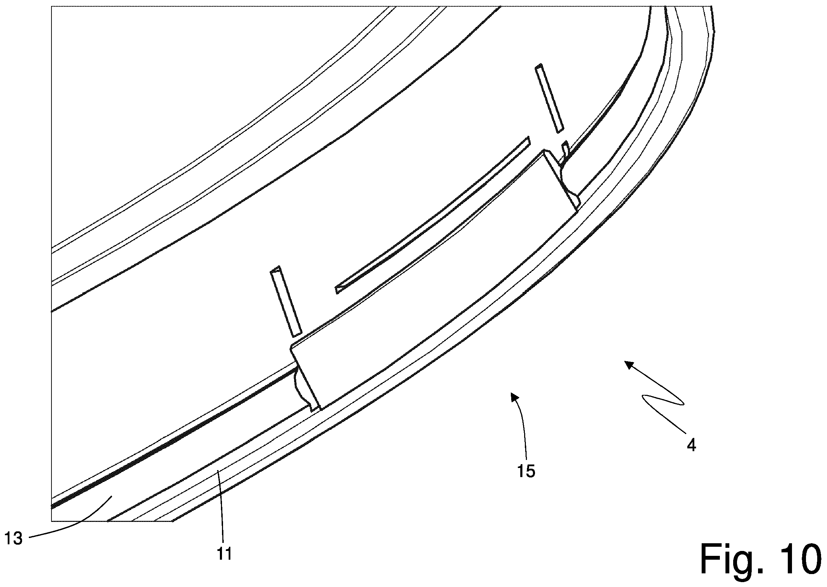

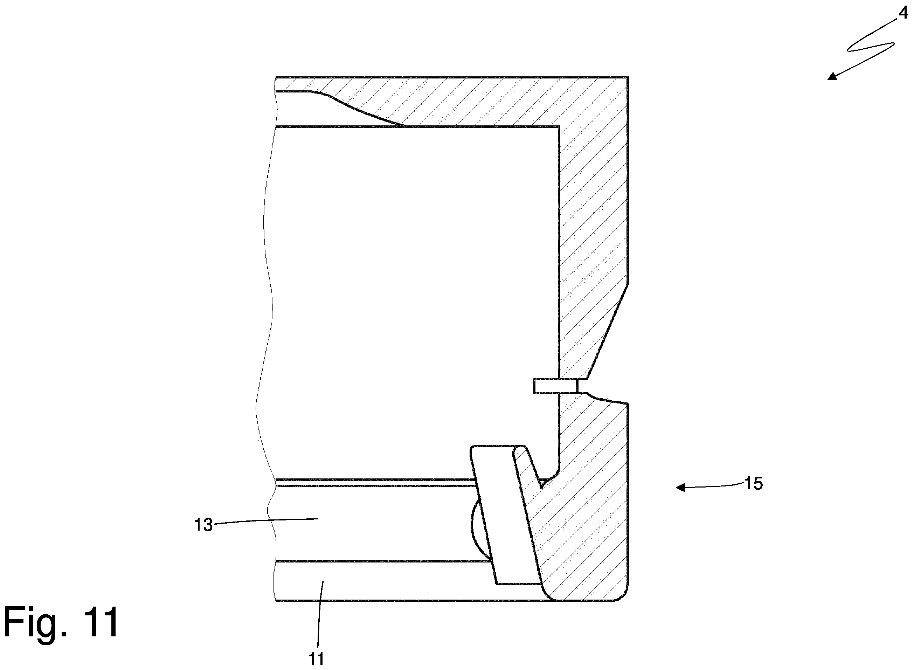

According to an alternative embodiment shown in figures 8-11, each snus box 1 has a pre-weakened proof portion 15, which gets broken when the interlocking is opened and provides proof that a snus box 1 was separated from the stack 9. Namely, in order to open the interlocking between two adjacent snus boxes 1, the pre-weakened proof portion 15 necessarily has to be broken, thus generating an unmistakable and indelible signal that an interlocking was opened (namely, that a snus box 1 was separated from the stack 9). In particular, the proof portion 15 consists of a piece of the connection ring 11 of the main container 4, which is connected to the rest of the connection ring 11 through two thin bridges 16 configured to break following the mechanical stresses generated by the opening of the interlocking; when the interlocking between two adjacent snus boxed 1 is opened, the connection ring 11 of the upper snus box 1 has to elastically deform (thus being mechanically stressed) and these mechanical stresses overcome the resistance of the two thin bridges 16 and, as a consequence, the two thin bridges 16 break, hence leaving the proof portion 15 locked in the lateral connection portion 12 of the lower snus box 1.

Thanks to the fact that the stack 9 remains firm (namely, remains stable) by itself (because of the gluing or the mechanical interlocking), the stack 9 does not need to be wrapped in a film of transparent plastic material, thus significantly reducing the total quantity of packing material as well as the variety of the packing material; furthermore, the formation of the stack 9 is simplified, since a final wrapping step involving a film of transparent plastic material is avoided.

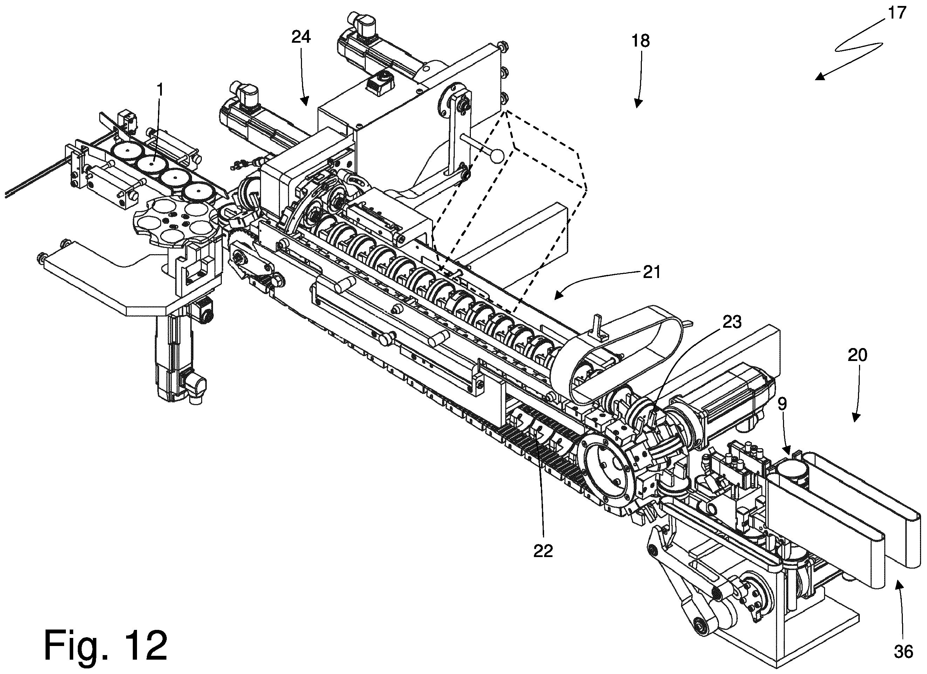

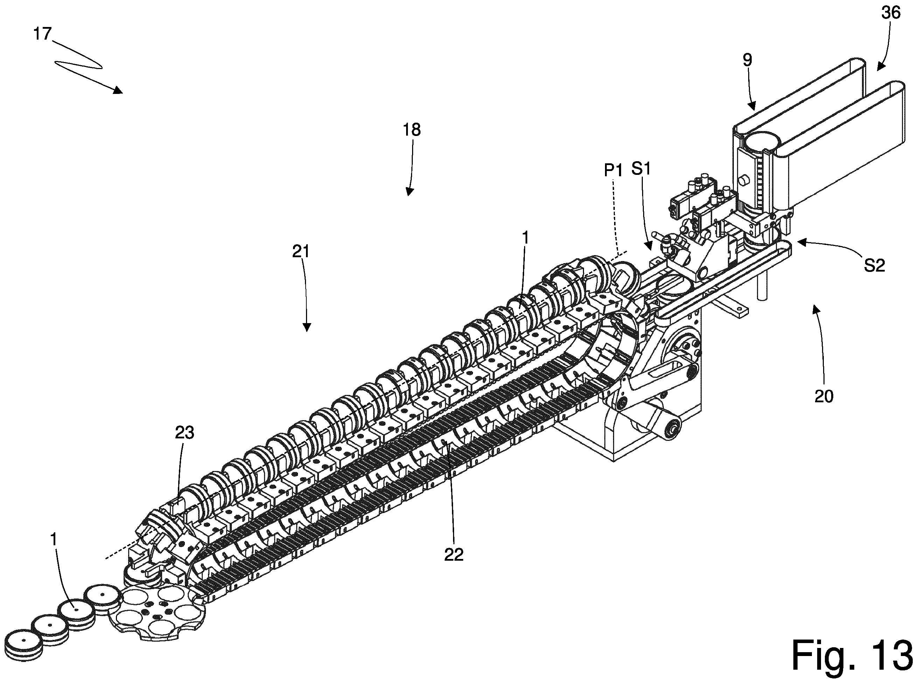

In figures 12 and 13, reference number 17 indicates, as a whole, a packer machine to create the stack 9 of snus boxes 1 described above.

The packer machine 17 features an intermittent operation, namely it cyclically alternates movement phases and standstill phases. The packer machine 17 comprises a labelling unit 18 (schematically shown in figure 8), where a label 19 (shown in figure 4) is laterally applied to each snus box 1, and a following grouping unit 20, where the (previously labelled) snus boxes 1 are grouped in order to form the stacks 9.

The labelling unit 18 comprises a conveyor 21, which moves the snus boxes 1 along a horizontal path P1 extending between an input station (where the snus boxes 1 enter the conveyor 21) and an output station (where the snus boxes 1 leave the conveyor 21). The conveyor 21 comprises a conveyor belt 22, which is closed in a ring shape around two end pulleys (one of them being motorised) and supports a plurality of pockets 23, each designed to contain a corresponding snus box 1. According to a preferred embodiment, each pocket 23 of the conveyor 21 is shaped so as to accommodate and hold the snus boxes 1 in a *"standing"* position (namely, with the walls 2 and 3 of each snus box 1 arranged vertically and, hence, oriented perpendicularly to the horizontal path P1). According to an alternative embodiment to the one shown herein, each pocket 23 of the conveyor 21 is shaped so as to accommodate and hold the snus boxes 1 in a *"flat"* position (namely, with the walls 2 and 3 of each snus box 1 arranged horizontally and, hence, oriented parallel to the horizontal path P1).

The labelling unit 18 comprises an orienting device 24 (shown in figure 12), which is arranged along the horizontal path P1 and is designed to rotate each snus box 1 moved by the conveyor 21 around the longitudinal axis A so as to give the snus box 1 a desired orientation. In particular, the orienting device 24 comprises (at least) one video camera, which captures an image of a snus box 1 from which to identify the current orientation of the snus box 1, and comprises an actuator, which causes (if necessary) a rotation of the snus box 1 in order to reach the desired orientation.

The labelling device 18 comprises an applying device (schematically shown with a broken line), which is arranged along the horizontal path P1 (immediately) downstream of the orienting device 24 and is designed to apply a label 19 (for example a tax stamp) on the lateral wall of each snus box 1.

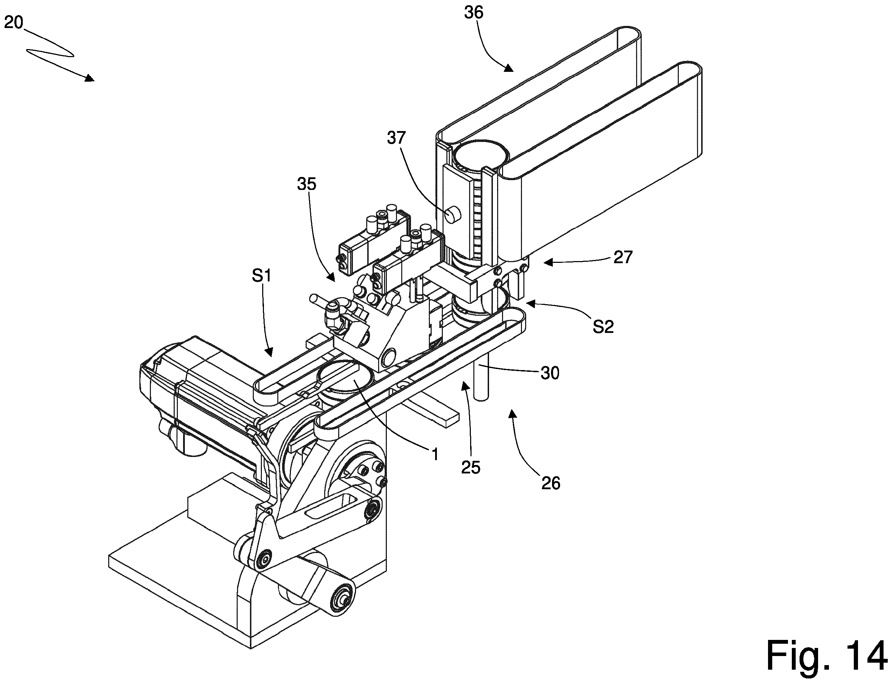

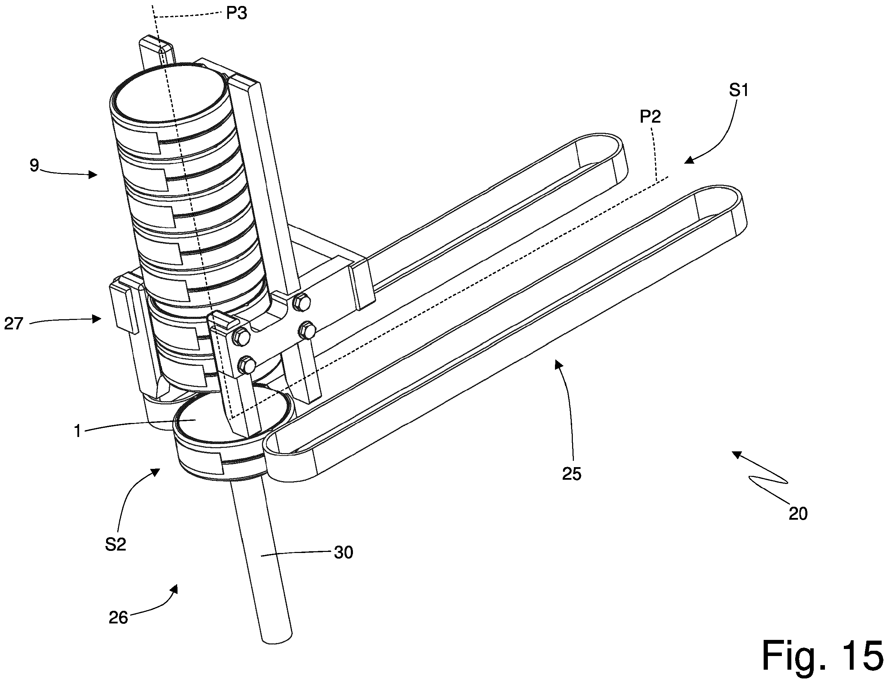

According to figure 14, the grouping unit 20 comprises a conveyor 25, which is configured to move a succession of snus boxes 1 one after the other and along a horizontal path P2 (shown in figure 15), which originates from the output station of the conveyor 21 (corresponding to an input station S1 of the conveyor 25) and ends in an output station S2, keeping the upper and lower walls 2 and 3 of each snus box 1 horizontal and parallel to the horizontal path P2. The conveyor 25 comprises a horizontal sliding plane, along which the snus boxes 1 slide, and two pairs of conveyor belts, which are arranged on the two opposite sides of the sliding plane and are vertically oriented (i.e. the belts are wound around respective pairs of pulleys, which rotate around vertical axes) so as to engage the lateral walls of the snus boxes 1 moving along the horizontal path P2.

The grouping unit 20 comprises a lifting device 26, which is arranged in the area of the output station S2 and is configured to push each snus box 1 arranged in the output station S2 upwards and along a vertical path P3 (shown in figure 15), which is perpendicular to the horizontal path P2.

Furthermore, the grouping unit 20 comprises a blocking device 27, which is arranged along the vertical path P3 downstream of the output station S2 and is configured to only enable a one-way movement of the snus boxes 1 along the vertical path P3, so that the snus boxes 1 can only go up - and not down - after they have moved past the blocking device 27. In other words, the blocking device 27 is a *"one-way valve",* which allows the snus boxes 1 to go up (move forward) along the vertical path P3, but does not allow the snus boxes 1 to go down (move backward) along the vertical path P3, once they have moved past the blocking device 27.

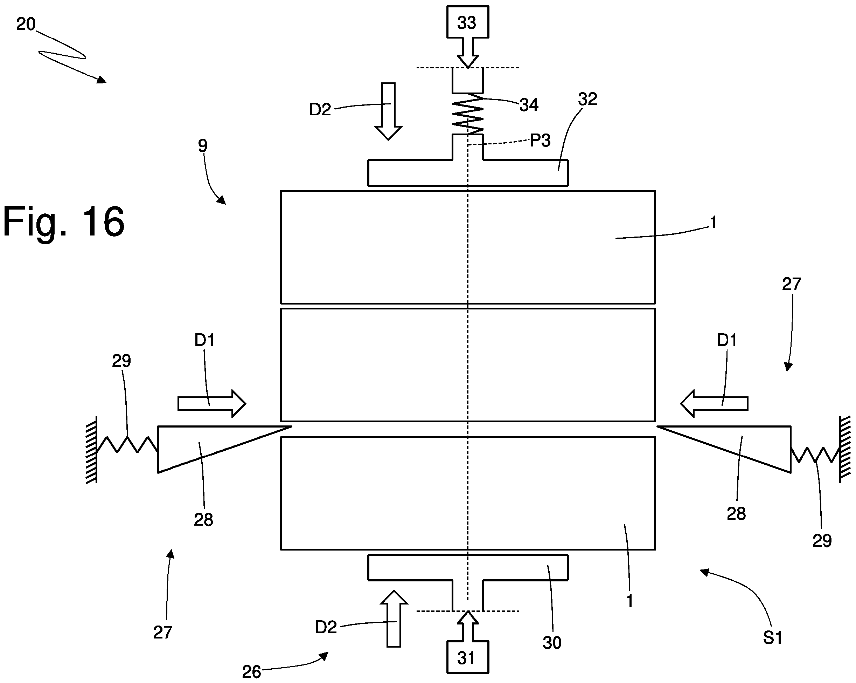

According to figure 16, the blocking device 27 comprises at least one stop body 28, which is movable along a horizontal blocking direction D1, which is perpendicular to the vertical path P3, between a stop position (shown on the left in figure 12), in which the stop body 28 invades the vertical path P3 (and, hence, prevents a snus box 1 from moving down), and a passage position (shown on the right on figure 12), in which the stop body 28 is on the outside of the vertical path P3 (and, hence, allows a snus box 1 to move up). There preferably are at least two stop bodies 28, which are symmetrically arranged around the vertical path P3, but the number of stop bodies 28 can also be greater than two.

Each stop body 28 is shaped like a wedge and has an inclined plane facing downwards, hence facing the output station S2. Furthermore, the blocking device 27 comprises an elastic element 29, which pushes the stop body 28 towards the stop position. In use, each stop body 28 is, at first, in the stop position (shown on the left in figure 16) and the upward movement of a snus box 1 pushes each stop body 28 towards the passage position (shown on the right in figure 16), compressing the corresponding elastic element 29; as soon as the snus box 1 moves past the stop bodies 28, the elastic elements 29 push the stop bodies 28 again to the stop position (shown on the left in figure 16) and, hence, prevent the snus box 1 that just moved past the elastic elements 29 from moving downward.

In other words, the stop bodies 28 are pushed towards the inside of the vertical path P3 by the respective elastic elements 29: when a snus box 1 moves forward (upward) along the vertical path P3, it progressively compresses the stop bodies 28, pushing an inclined wall thereof and consequently compressing the respective elastic elements 29, whereas, when a snus box 1 moves past the stop bodies 28, the stop bodies 28, due to the thrust exerted by the respective elastic elements 29, go back to projecting into the vertical path P3, offering the snus box 1 a flat wall of theirs, which prevents the snus box 1 from moving backward (downward) along the vertical path P3 (namely, the stop bodies 28 prevent the snus box 1 from possibly sliding down).

According to a different embodiment which is not shown herein, the stop bodies 28 are motorised (namely, are moved by an electric actuator) and, therefore, their movement can take place regardless of the thrust exerted by the snus boxes 1 passing by; in this embodiment, the stop bodies 28 could not be coupled to elastic elements 29 (for they are moved in both directions by the electric actuator) and could not have a wedge-like shape (namely, a triangular shape), since they no longer need to be pushed by the snus boxes 1 passing by.

According to figure 16, the lifting device 26 comprises a pushing element 30, which is movable along a vertical pushing direction D2 and is arranged under the output station S2 in order to push the lower wall 3 of a snus box 1 standing in the output station S2 upwards. Furthermore, the lifting device 26 comprises an actuator device 31 (typically, an electric motor), which is configured to move the pushing element 30 along the vertical pushing direction D2.

The lifting device 26 comprises an accompanying element 32, which is movable along the vertical pushing direction D2 and is arranged above the output station S2 in order to press downwards against the upper wall 2 of a snus box 1, which is located above the output station S2 and constitutes the first snus box 1 of the stack 9. Furthermore, the lifting device 26 comprises an actuator device 33, which is configured to move the accompanying element 32 along the vertical pushing direction D2. A (mechanical or pneumatic) elastic element 34 is preferably interposed between the accompanying element 32 and the actuator device 33 and is configured to generate a substantially constant elastic force.

In use, the pushing element 30 and the accompanying element 32 clamp the stack 9 being formed between them, applying to the snus boxes 1 making up the stack 9 being formed an adjusted compression (whose intensity is determined by the elastic force generated by the elastic element 34); this adjusted compression is useful both in case the snus boxes 1 making up the stack 9 being formed are joined through gluing, since it improves the gluing (which also requires a given compression in order to allow the glue 10 to properly adhere), and in case the snus boxes 1 making up the stack 9 being formed are joined through interlocking, since, in order to create the interlocking, an adequate compression force needs to be applied.

According to figure 14, the grouping unit 20 can comprise a gluing device 35, which is arranged along the horizontal path P2 upstream of the output station S2 and is designed to apply glue 10 to a wall, preferably the upper wall 2, of each snus box 1 moved by the conveyor 25.

The gluing device 35 is present and active only when the snus boxes 1 making up the stack 9 being formed are joined through gluing.

The grouping unit 20 can comprise an orienting device (not shown), which is arranged along the horizontal path P2 upstream of the output station S2 and is designed to rotate each snus box 1 moved by the conveyor 25 around the longitudinal axis A; the function of the orienting device is that of arranging all snus boxes 1 with the same orientation before forming the stack 9 in the output station S2 both for aesthetic reasons (the labels 19 look better if they are all aligned with one another) and, if necessary, for technical reasons (namely, to apply possible glue 10 in predetermined positions, rather than in random positions where it might interfere with the opening of the auxiliary lid 8 or to arrange the snus boxes 1 in the right position to obtain the mutual interlocking).

According to figure 14, a conveyor 36 originates from the grouping unit 20, receives the complete stacks 9 of snus boxes 1 from the lifting device 26 and moves the complete stacks 9 of snus boxes 1 along a horizontal output path. The conveyor 36 comprises a horizontal sliding plane, along which the stacks 9 of snus boxes 1 slide, and two pairs of conveyor belts, which are arranged on the two opposite sides of the sliding plane and are vertically oriented so as to engage the lateral walls of the stacks 9 of snus boxes 1 moving along the horizontal output path. The conveyor 36 can manage to directly *"capture"* a stack 9 of snus boxes 1 standing in the conveyor 25 or a pushing element 37 can be provided in order to push the stack 9 of snus boxes 1 standing in the lifting device 26 into the conveyor 36.

According to a possible embodiment, at the entry of the conveyor 36 there can be provided a movable gate, which cyclically moves between a closed position, in which the gate prevents a stack 9 of snus boxes 1 standing in the lifting device 26 from stepping into the conveyor 36, and an open position, in which the gate allows a stack 9 of snus boxes 1 standing in the lifting device 26 to step into the conveyor 36; obviously, the gate is held in the closed position until a stack 9 of snus boxes 1 is completely formed in the lifting device 26 and is moved to the open position only when the stack 9 of snus boxes 1 is complete and, hence, can leave the lifting device 26.

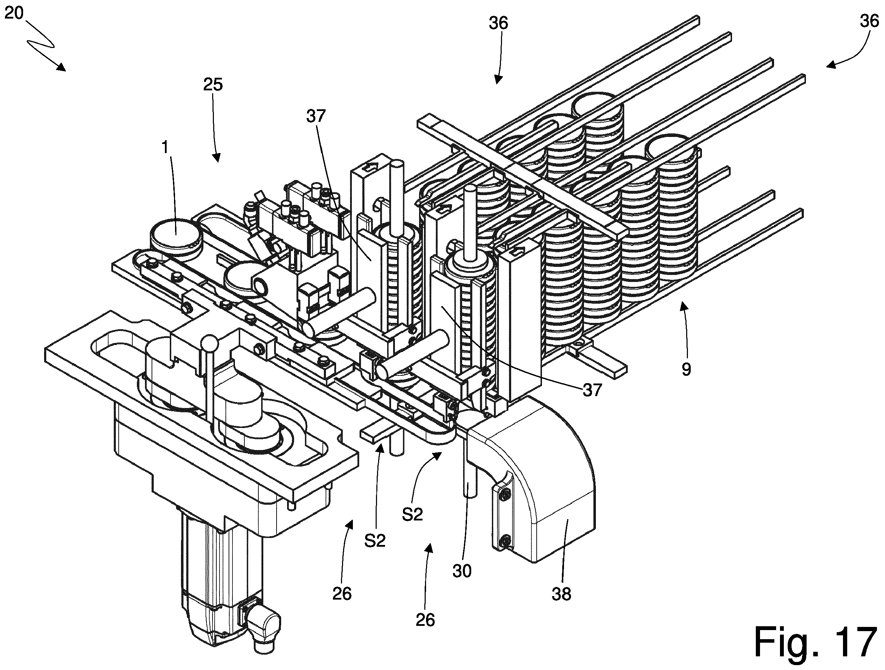

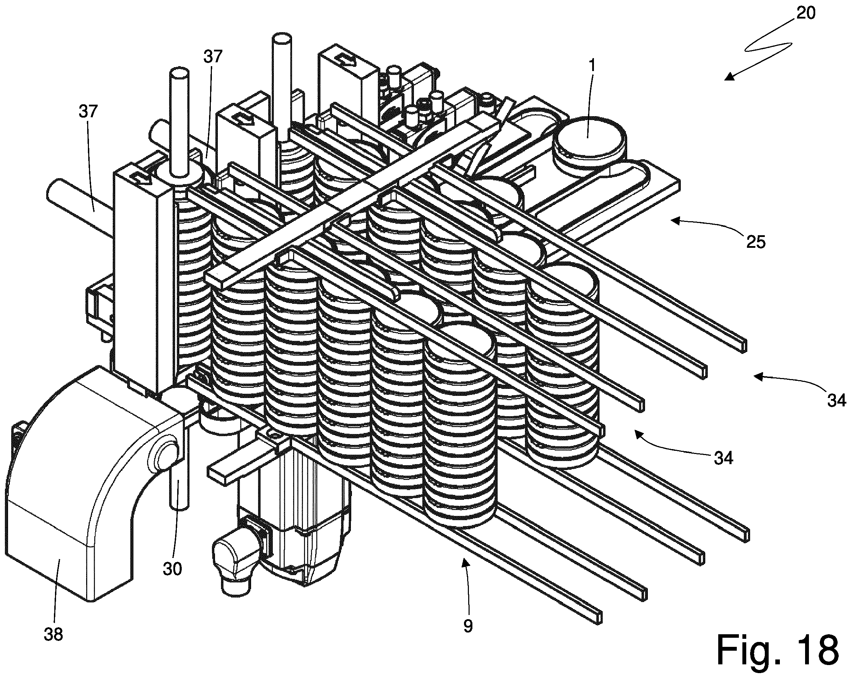

According to a different embodiment shown in figures 17 and 18, the conveyor 36 does not comprise conveyor belts, but only comprises the horizontal sliding plane, along which the stacks 9 of snus boxes 1 slide, which are pushes along the sliding plane by the pushing element 37.

The conveyor 36 could also be coupled to a labelling device to apply to each stack 9 of snus boxes 1 a corresponding label, which is generally provided with a non-drying glue (namely, a glue that can easily be separated and does not leave residues after the separation) so that it can easily and quickly be removed from the stack 9 of snus boxes 1, when the single snus boxes 1 need to be removed from the stack 9.

According to a possible embodiment shown in figures 17 and 18, at the end of the horizontal path P2 (namely, past the output station S2) there could be a rejection station, where a defective snus box 1 is led (for example by means of a gravity chute 38) towards a collecting system: in use, a snus box 1 that was identified as defective is not used (pushed upwards) by the lifting device 26 located in the output station S2 and, hence, proceeds past the output station S2, consequently reaching the rejection station. In the embodiment shown in figures 12-15, along the conveyor 25 (namely, along the horizontal path P2) there is one single output station S2 in the area of one single lifting device 26. According to a different embodiment shown in figures 17 and 18, along the conveyor 25 (namely, along the horizontal path P2) there are two successive output stations S2 (namely, arranged one after the other) in the area of two twin lifting devices 26, which are alternatively used: while one lifting device 26 is used to form a stack 9 of snus boxes 1, in the other lifting device 26 the previously formed stack 9 of snus boxes 1 is transferred to a corresponding conveyor 36. By so doing, the productivity of the grouping unit 20 is increased, for the formation of the stacks 9 of snus boxes 1 takes place without stopping, as two lifting devices 26 to be alternatively used are available. In other words, in the grouping unit 20 shown in figures 12-15 there is one single lifting device 26 and, hence, a given amount of time (which is small, but only to a certain extent and, therefore, is significant) has to elapse between the formation of a stack 9 of snus boxes 1 and the formation of a following stack 9 of snus boxes 1 in order to wait for the lifting device 26 to empty by completely transferring the stack 9 of snus boxes 1 that was just formed to the conveyor 26; on the other hand, in the grouping unit 20 shown in figures 17 and 18 (provided with two twin lifting devices 26), the formation of the stacks 9 of snus boxes 1 takes place without stopping because, while a lifting device 26 is emptying by transferring the stack 9 of snus boxes 1 that was just formed to the conveyor 26, a new stack 9 of snus boxes 1 is beginning in the other lifting device 26. Obviously, two twin lifting devices 26 also require the presence of two twin conveyors 36 side by side, which alternatively receive a stack 9 of snus boxes 1 from the corresponding lifting device 26; obviously, each conveyor 36 can be provided with a pushing element 37 of its, which pushes a stack 9 of snus boxes 1 standing in the corresponding lifting device 26 into the conveyor 36.

The embodiments described herein can be combined with one another, without for this reason going beyond the scope of protection of the invention.

The grouping unit 20 described above has numerous advantages because the stacks 9 of snus boxes 1 can be formed in an effective manner (i.e. by only forming complete stacks 9 and without the risk of damaging the snus boxes 1 during the formation of the stacks 9).

Furthermore, the grouping unit 20 described above forms the stacks 9 of snus boxes 1 in an efficient manner (i.e. at a high operating speed, approximately higher than 32-42 stacks 9 of snus boxes per minute).

Finally, the grouping unit 20 described above is simple to be manufactured and compact.

### LIST OF THE REFERENCE NUMBERS OF THE FIGURES

- 1: snus box
- 2: upper wall
- 3: lower wall
- 4: main container
- 5: main lid
- 6: main chamber
- 7: secondary chamber
- 8: auxiliary lid
- 9: stack
- 10: glue
- 11: connection ring
- 12: connection portion
- 13: rib
- 14: rib
- 15: proof portion
- 16: bridges
- 17: packer machine
- 18: labelling unit
- 19: label
- 20: grouping unit
- 21: conveyor
- 22: conveyor belt
- 23: pockets
- 24: orienting device
- 25: conveyor
- 26: lifting device
- 27: blocking device
- 28: stop body
- 29: elastic element
- 30: pushing element
- 31: actuator device
- 32: accompanying element
- 33: actuator device
- 34: elastic element
- 35: gluing device
- 36: conveyor
- 37: pushing element
- 38: gravity chute
- A: longitudinal axis
- P1: horizontal path
- P2: horizontal path
- P3: vertical path
- D1: blocking direction
- D2: pushing direction
- S1: input station
- S2: output station

## Claims

1. A grouping unit (20) to create a stack (9) of snus boxes (1), each comprising: a group of snus bags, a main container (4) having a lower wall (3) of the snus box (1), and a main lid (5), which has an upper wall (2) of the snus box (1), is coupled to the main container (4) and delimits, together with the main container (4), a main chamber (6) housing the group of snus bags; the grouping unit (20) comprises a conveyor (25), which is configured to move a succession of snus boxes (1) one after the other along a horizontal path (P2), which ends in an output station (S2), keeping the upper and lower walls (2, 3) of each snus box (1) horizontal and parallel to the horizontal path (P2);
the grouping unit (20) is **characterized in that** it comprises:
a lifting device (26), which is arranged in the area of the output station (S2) and is configured to push each snus box (1) arranged in the output station (S2) upwards and along a vertical path (P3), which is perpendicular to the horizontal path (P2); and
a blocking device (27), which is arranged along the vertical path (P3) downstream of the output station (S2) and is configured to only enable a one-way movement of the snus boxes (1) along the vertical path (P3), so that the snus boxes (1) can only go up - and not down - after they have moved past the blocking device (27).

2. The grouping unit (20) according to claim 1, wherein the blocking device (27) comprises at least one stop body (28), which is movable along a horizontal blocking direction (D1), which is perpendicular to the vertical path (P3), between a stop position, in which the stop body (28) invades the vertical path (P3), and a passage position, in which the stop body (28) is on the outside of the vertical path (P3).

3. The grouping unit (20) according to claim 2, wherein
the stop body (28) is shaped like a wedge and has an inclined plane facing downwards, hence facing the output station (S2); and
the blocking device (27) comprises a first elastic element (29), which pushes the stop body (28) towards the stop position.

4. The grouping unit (20) according to claim 1, 2 or 3, wherein the lifting device (26) comprises:
a pushing element (30), which is movable along a vertical pushing direction (D2) and is arranged under the output station (S2) in order to push the lower wall (3) of a snus box (1) standing in the output station (S2) upwards; and
a first actuator device (31), which is configured to move the pushing element (30) along the vertical pushing direction (D2).

5. The grouping unit (20) according to claim 4, wherein the lifting device (26) comprises:
an accompanying element (32), which is movable along the vertical pushing direction (D2) and is arranged above the output station (S2) in order to press downwards against the upper wall of a snus box (1), which is located above the output station (S2) and constitutes the first snus box (1) of the stack (9); and
a second actuator device (33), which is configured to move the accompanying element (32) along the vertical pushing direction (D2).

6. The grouping unit (20) according to claim 5, wherein a second elastic element (34) is interposed between the accompanying element (32) and the second actuator device (33).

7. The grouping unit (20) according to one of the claims from 1 to 6 and comprising a gluing device (35), which is arranged along the horizontal path (P2) upstream of the output station (S2) and is designed to apply glue (10) to a wall, preferably the upper wall (2), of each snus box (1) moved by the conveyor (25).

8. The grouping unit (20) according to one of the claims from 1 to 7 and comprising an orienting device, which is arranged along the horizontal path (P2) upstream of the output station (S2) and is designed to rotate each snus box (1) moved by the conveyor (25) around a longitudinal rotation axis.

9. The grouping unit (20) according to one of the claims from 1 to 8 and comprising two successive output stations (S2) arranged one of the other in the area of two twin lifting devices (26), which are used alternatively.

10. A grouping method to create a stack (9) of snus boxes (1), each comprising: a group of snus bags, a main container (4), which has a lower wall (3) of the snus box (1), and a main lid (5), which has an upper wall (2) of the snus box (1), is coupled to the main container (4) and delimits, together with the main container (4), a main chamber (6) housing the group of snus bags; the grouping method comprises the step of moving, by means of a conveyor (25), a succession of snus boxes (1) one after the other along a horizontal path (P2), which ends in an output station (S2), keeping the upper and lower walls (2, 3) of each snus box (1) horizontal and parallel to the horizontal path (P2);
the grouping method is **characterized in that** it comprises the further steps of:
pushing, by means of a lifting device (26) arranged in the area of the output station (S2), each snus box (1) arranged in the output station (S2) upwards and along a vertical path (P3), which is perpendicular to the horizontal path (P2); and
only enabling a one-way movement of the snus boxes (1) along the vertical path (P3) by means of a blocking device (27), which is arranged along the vertical path (P3) downstream of the output station (S2), so that the snus boxes (1) can only go up - and not down - after they have moved past the blocking device (27).

11. The grouping method according to claim 10 and comprising the further step of applying glue (10) to a wall, preferably the upper wall (2), of the snus boxes (1) moved by the conveyor (25) in order to determine a gluing between the snus boxes (1) during the formation of the stack (9) along the vertical path (P3).

12. The grouping method according to claim 10 and comprising the further step of creating, during the formation of the stack (9) along the vertical path (P3) and between each snus box (1) and the adjacent snus box (1), an interlocking that determines a firm mechanical connection between the two snus boxes (1) in order to prevent the two snus boxes (1) from moving apart.

13. The grouping method according to claim 10, 11 or 12 and comprising the further step of applying glue (10) to a wall, preferably the upper wall (2) of each snus box (1) moved by the conveyor (25) by means of a gluing device (35), which is arranged along the horizontal path (P2) upstream of the output station (S2).

14. A grouping method to create a stack (9) of snus boxes (1), each comprising: a group of snus bags, a main container (4), which has a lower wall (3) of the snus box (1), and a main lid (5), which has an upper wall (2) of the snus box (1), is coupled to the main container (4) and delimits, together with the main container (4), a main chamber (6) housing the group of snus bags; the grouping method comprises the step of applying glue (10) to a wall, preferably the upper wall (2), of the snus boxes (1) in order to determine a gluing between the snus boxes (1) during the formation of the stack (9).

15. A grouping method to create a stack (9) of snus boxes (1), each comprising: a group of snus bags, a main container (4), which has a lower wall (3) of the snus box (1), and a main lid (5), which has an upper wall (2) of the snus box (1), is coupled to the main container (4) and delimits, together with the main container (4), a main chamber (6) housing the group of snus bags; the grouping method comprises the step of creating, between each snus box (1) and the adjacent snus box (1), an interlocking that determines a firm mechanical connection between the two snus boxes (1) in order to prevent the two snus boxes (1) from moving apart.
